# EUROPÄISCHE PATENTSCHRIFT

(11) **EP 3 084 192 B1**
(45) Veröffentlichungstag und Bekanntmachung des Hinweises auf die Patenterteilung: **28.11.2018**
(21) Anmeldenummer: 14808918.8
(22) Anmeldetag: 01.12.2014
(51) Int. Cl.: F02D 41/14, F01N 3/22, F01N 13/00

(54) **BRENNKRAFTMASCHINE UND VERFAHREN ZUM BETREIBEN EINER BRENNKRAFTMASCHINE**
INTERNAL COMBUSTION ENGINE AND METHOD FOR OPERATING AN INTERNAL COMBUSTION ENGINE
MACHINE À COMBUSTION INTERNE ET PROCÉDÉ PERMETTANT DE FAIRE FONCTIONNER UNE MACHINE À COMBUSTION INTERNE

(30) Priorität: 16.12.2013 DE 102013226063
(43) Veröffentlichungstag der Anmeldung: 26.10.2016
(73) Patentinhaber: VOLKSWAGEN AKTIENGESELLSCHAFT, 38440 Wolfsburg (DE)
(72) Erfinder: LINDENKAMP, Nils, 38126 Braunschweig (DE); PAULOVSKY, Markus, 38448 Wolfsburg (DE)
(86) Internationale Anmeldenummer: PCT/EP2014/076129
(87) Internationale Veröffentlichungsnummer: WO 2015/090923

(56) Entgegenhaltungen:
- WO-A1-93/01401
- DE-A1- 3 506 235
- DE-A1- 4 344 137
- DE-A1- 19 806 033

## Beschreibung

Die Erfindung betrifft eine Brennkraftmaschine sowie ein Verfahren zum Betreiben einer Brennkraftmaschine.

Um den Kraftstoffverbrauch von Brennkraftmaschinen zu senken, wurden von in der Automobiltechnik sogenannte Downsizing-Konzepte entwickelt. Diese beruhen darauf, durch eine Verkleinerung des Hubraums, gegebenenfalls in Verbindung mit einer Reduktion der Zylinderzahl, eines Verbrennungsmotors der Brennkraftmaschine zum einen die mechanischen Verluste, insbesondere Reibungsverluste, zu vermindern und zum anderen den Verbrennungsmotor im zeitlichen Mittel häufiger an seinem Auslegungspunkt und damit näher an seinem Wirkungsgradoptimum zu betreiben. Da eine Verkleinerung des Hubraums bei ansonsten gleichbleibenden Randbedingungen mit einem entsprechenden Leistungs- unter Drehmomentverlust verbunden wäre, ist vorgesehenen, diese Verluste durch eine Aufladung zu kompensieren.

Bei Brennkraftmaschinen, die für den Antrieb von Kraftfahrzeugen eingesetzt werden, erfolgt eine aufwändige Abgasnachbehandlung. Dazu werden regelmäßig Katalysatoren eingesetzt, die eine Umwandlung von Schadstoffen in als nicht schädlich angesehene Abgasbestandteile katalytisch unterstützen. Bei Ottomotoren ist insbesondere der Einsatz eines Dreiwegekatalysators verbreitet, der gegebenenfalls noch durch einen NOx-Speicherkatalysator ergänzt sein kann. Bekannt ist zudem, einen Dreiwegekatalysator in einen motornahen Vorkatalysator und einen Nachkatalysator (Hauptkatalysator) zu unterteilen. Dabei ist regelmäßig vorgesehen, den Vorkatalysator konstruktiv hinsichtlich einer Hochtemperaturstabilität und den Nachkatalysator hinsichtlich einer möglichst geringen Anspringtemperatur ("low light off") zu optimieren. Hintergrund dabei ist, dass Katalysatoren eine nennenswerte Konvertierung der Schadstoffe erst nach dem Erreichen einer unteren Grenztemperatur ihrer Betriebstemperaturbereiche, der so genannten Light-Off-Temperatur, erreichen, die beim Dreiwegekatalysator bei ca. 300 °C liegt. Temperaturen des Katalysators ab ca. 800°C führen zunehmend zu einer sehr schnellen Alterung und damit einer sich verringernden Lebensdauer des Katalysators. Der Vorkatalysator soll durch seine motornahe Anordnung schnell seinen Betriebstemperaturbereich erreichen und somit bereits sehr früh nach einem Kaltstart eine katalytische Konvertierung der Schadstoffe ermöglichen. Aus Bauraum- und Kostengründen kann ein Vorkatalysator jedoch regelmäßig nur vergleichsweise klein dimensioniert werden, so dass bei einem Betrieb des Verbrennungsmotors mit hohen Lasten und Drehzahlen und folglich großen Abgasmassenströmen (nicht konvertierte) Schadstoffe den Vorkatalysator passieren können. Diese werden jedoch in dem Nachkatalysator, der dann regelmäßig seinen Betriebstemperaturbereich erreicht haben sollte, konvertiert.

Insbesondere nach einem Kaltstart eines Ottomotors sind die Emissionen von Kohlenwasserstoffen (HC) und Kohlenmonoxid (CO) vergleichsweise hoch, da sich an den kalten Zylinderwänden Kraftstoff niederschlägt, der unverbrannt in den Abgasstrang gerät. Zur Verbesserung der Schadstoffemissionen nach einem Kaltstart ist es daher bekannt, im Rahmen einer so genannten Sekundärlufteinblasung Umgebungsluft in den Abgasstrang stromauf des Dreiwegekatalysator einzubringen. Die unverbrannten Kraftstoffbestandteile können so in dem Katalysator mit dem zusätzlich eingebrachten Sauerstoff oxidieren, wodurch nicht nur die gewünschte Konvertierung erfolgt, sondern gleichzeitig ein Wärmeeintrag in den Abgasstrang und somit insbesondere in den Dreiwegekatalysator erreicht wird. Dadurch kann eine schnelle Erwärmung des Katalysators bis zum Erreichen seines Betriebstemperaturbereichs unterstützt werden. Es ist ebenfalls bekannt, im Rahmen der Sekundärluftanweisung ein fettes (unterstöchiometrisches) Kraftstoff-Luft-Grundgemisch für den Ottomotor einzustellen, um den Anteil unverbrannter Kraftstoffbestandteile im Abgas zu erhöhen und damit die Erwärmung des Katalysators zu unterstützen.

Die zusätzliche Luft für eine Sekundärlufteinblasung wird regelmäßig mittels eines separaten Gebläses in den Abgasstrang gefördert. Alternativ dazu ist aus der DE 35 06 235 A1 bekannt, die für die Sekundärlufteinblasung genutzte Luft stromauf eines Verdichters aus dem Frischgasstrang zu entnehmen. Demnach wird die Verdichterleistung zur Förderung der in den Abgasstrang eingebrachten Luft genutzt. Auf ein separates Sekundärluftgebläse kann dadurch verzichtet werden. Dabei soll sich dieses Vorgehen sowohl für mechanisch als auch mittels eines Abgasturboladers aufgeladene Verbrennungsmotoren eignen.

In der US 5,460,784 ist dagegen offenbart, dass eine Sekundärlufteinblasung durch Abzweigung von verdichtetem Frischgas aus einem Frischgasstrang nicht für mittels Abgasturbolader aufgeladene Ottomotoren geeignet ist, da es in dem relevanten Zeitraum von ca. 50 bis 100 Sekunden direkt nach einem Kaltstart, in dem der Verbrennungsmotor regelmäßig im Leerlauf oder mit geringer Last betrieben wird, an einer ausreichend hohen Verdichterleistung fehlen soll. Weiterhin ist in der US 5,460,784 offenbart, dass es grundsätzlich nicht sinnvoll sein soll, nach dem Ablauf dieses kurzen Zeitraums nach einem Kaltstart noch zusätzliche Luft zu dem Katalysator zu fördern. Es wird jedoch angemerkt, dass in bestimmten transienten Betriebszuständen (Volllast) eine Gemischanfettung vorgesehen sein kann und dann dem Abgas zusätzliche Luft zur Oxidation zugeführt werden könne. Der so erzielte Effekt sei jedoch vernachlässigbar gegenüber der Wirkung direkt nach einem Kaltstart.

Beim Dieselmotor kommen neben NOx-Speicherkatalysatoren insbesondere Diesel-Oxidationskatalysatoren, sogenannte SCR-Katalysatoren zur selektiven katalytischen Reduktion von Stickoxiden, sowie Partikelfilter zum Einsatz.

In seltenen Fällen kann der Einsatz eines Partikelfilters auch bei einem Ottomotor sinnvoll sein. So offenbart beispielsweise die DE 10 2009 046 559 A1, dass bei einem mit einem Partikelfilter versehenen Ottomotor zur Regeneration des Partikelfilters Frischluft aus dem Frischgasstrang abgezweigt und stromauf des Partikelfilters in den Abgasstrang eingebracht werden kann. Dadurch soll ein für einen oxidativen Rußabbrand erforderlicher Sauerstoffüberschuss erzeugt werden, der bei einem Ottomotor - anders als beim Dieselmotor - anderenfalls nicht zur Verfügung stünde.

Die Problematik, dass Abgastemperaturen oberhalb von ca. 800 °C zu einer verstärkten thermischen Alterung und damit einer deutlich verringerten Lebensdauer des Katalysators führen können, stellt sich insbesondere bei den im Rahmen von Downsizing-Konzepten zunehmenden Aufladegraden von Verbrennungsmotoren. Um zu vermeiden, dass ein oberer Grenzwert des Betriebstemperaturbereichs eines Katalysators überschritten wird, kann vorgesehen sein, Ottomotoren bei einem Betrieb mit oder nahe der Volllast mit Kraftstoff und Frischgas in einem unterstöchiometrischen Verhältnis zu versorgen. Ein solcher fetter Betrieb des Ottomotors führt zu einer relativ geringen Abgastemperatur, wodurch verhindert werden kann, dass der obere Grenzwert des Betriebstemperaturbereichs des Katalysators überschritten wird. Dadurch können sich jedoch die Schadstoffemissionen wegen in dem Abgas enthaltener, unverbrannter Kraftstoffbestandteile verschlechtern, da diese in dem Katalysator nicht konvertiert werden. Beispielsweise werden bei aufgeladenen Ottomotoren derzeit spezifische Leistungen von über 90 kW je Liter Hubraum erreicht, womit jedoch Abgastemperaturen von 920°C und mehr verbunden sein können.

Die WO 93/01401 A1 beschreibt ein Verfahren zur sogenannten Sekundärlufteinblasung, bei der in einem Betrieb eines Verbrennungsmotors einer Brennkraftmaschine nach einem Kaltstart, der durch noch nicht optimale Betriebsbedingungen und daraus folgend einem (ungewollten) unterstöchiometrischen Betrieb des Verbrennungsmotors gekennzeichnet ist, Frischgas in einen Abgasstrang der Brennkraftmaschine stromauf eines darin angeordneten Katalysators eingebracht wird, um ein möglichst schnelles Wirksamwerden des Katalysators zu erreichen. Dabei ist vorgesehen, dass das Frischgas auf der Hochdruckseite eines mechanisch, d.h. von dem Verbrennungsmotor direkt angetriebenen Kompressors abgezweigt und über eine Überströmleitung in den Abgasstrang eingebracht wird.

Aus der DE 43 44 137 A1 ist ein System zum Schutz eines Katalysators in einem Abgassystem einer Brennkraftmaschine vor Übertemperatur bekannt geworden.

Ausgehend von diesem Stand der Technik lag der Erfindung die Aufgabe zugrunde, eine Möglichkeit anzugeben, die Schadstoffemissionen eines bei hoher Leistung unterstöchiometrisch betriebenen Verbrennungsmotors, insbesondere Ottomotors, auf möglichst einfache Weise zu verringern.

Diese Aufgabe wird durch eine Brennkraftmaschine gemäß dem Patentanspruch 1 sowie ein Verfahren zum Betreiben einer Brennkraftmaschine gemäß dem Patentanspruch 10 gelöst. Vorteilhafte Ausgestaltungen der erfindungsgemäßen Brennkraftmaschine und des erfindungsgemäßen Verfahrens sind Gegenstand der weiteren Patentansprüche und ergeben sich aus der nachfolgenden Beschreibung der Erfindung.

Der Erfindung liegt der Gedanke zu Grunde, basierend auf einem unterstöchiometrischen (fetten) Betrieb eines insbesondere fremdgezündeten (nach dem Otto-Prinzip arbeitenden) Verbrennungsmotors, wobei dieser unterstöchiometrische Betrieb dazu dient, die Abgastemperatur so gering zu halten, dass eine obere Grenztemperatur für die Turbine eines Abgasturboladers und/oder für eine in den Abgasstrang integrierte Abgasnachbehandlungseinrichtung, insbesondere einen (Dreiwege-)Katalysator, nicht überschritten wird, dem Abgas stromauf der Abgasnachbehandlungseinrichtung Sauerstoff enthaltendes Frischgas zuzuführen, wodurch in ausreichendem Maße Sauerstoff für die Umsetzung von unverbrannten Kraftstoffbestandteile in dem Katalysator zur Verfügung steht. Dadurch kann auf einfache Weise erreicht werden, dass die bekannte Maßnahme zur Geringhaltung der Abgastemperaturen mittels eines unterstöchiometrischen Betriebs des Verbrennungsmotors nicht mit einem vergleichsweise hohen Schadstoffgehalt des in die Umgebung entlassenen Abgases verbunden ist.

Demnach ist bei einer Brennkraftmaschine, die zumindest
- einen Verbrennungsmotor (insbesondere bevorzugt fremdgezündeten Verbrennungsmotor, Ottomotor),
- einen (zur Zuführung von (Sauerstoff aufweisendem) Frischgas zu dem Verbrennungsmotor dienenden) Frischgastrang mit einem darin integrierten Verdichter,
- einen (zur Abführung von in mindestens einem Brennraum des Verbrennungsmotors durch ein Verbrennen des Frischgases mit dem Kraftstoff erzeugten Abgases dienenden) Abgasstrang mit (mindestens) einer darin integrierten Abgasnachbehandlungseinrichtung, insbesondere einem (Dreiwege-) Katalysator, und (mindestens) einem darin integrierten Temperatursensor sowie
- eine mittels einer Regeleinrichtung regelbare Überströmleitung, die stromab des Verdichters aus dem Frischgasstrang abgeht und stromauf der Abgasnachbehandlungseinrichtung in den Abgasstrang mündet,
aufweist, erfindungsgemäß vorgesehen, dass beim Überschreiten einer Grenztemperatur des Abgases der Verbrennungsmotor mit einem unterstöchiometrischen Kraftstoff-Frischgas-Verhältnis (z.B. bis zu λ = 0,7, wobei λ die Luftzahl ist) betrieben wird und gleichzeitig Frischgas aus dem Frischgasstrang über die Überströmleitung in den Abgasstrang eingebracht wird, um ein möglichst stöchiometrisches, bevorzugt genau stöchiometrisches Abgasverhältnis in der Abgasnachbehandlungseinrichtung einzustellen. Eine zur Durchführung eines erfindungsgemäßen Verfahrens einsetzbare Brennkraftmaschine umfasst zumindest
- einen Verbrennungsmotor (insbesondere bevorzugt fremdgezündeten Verbrennungsmotor, Ottomotor),
- einen (mindestens) einen Verdichter ausweisenden Frischgastrang,
- einen (mindestens) eine Abgasnachbehandlungseinrichtung, insbesondere (Dreiwege-) Katalysator, sowie (mindestens) einen Temperatursensor aufweisenden Abgasstrang,
- eine mittels (mindestens) einer Regeleinrichtung regelbare Überströmleitung, die stromab des Verdichters aus dem Frischgasstrang abgeht und stromauf der Abgasnachbehandlungseinrichtung in den Frischgasstrang mündet und
- (mindestens) eine Steuereinheit (insbesondere eine zentrale Motorsteuerung), die derart ausgebildet ist, dass durch diese ein dem Verbrennungsmotor zugeführtes Kraftstoff-Frischgas-Verhältnis regelbar ist.
Die Steuereinheit ist erfindungsgemäß weiterhin derart ausgebildet, dass diese beim Überschreiten einer Grenztemperatur des Abgases (insbesondere direkt hinter dem Verbrennungsmotor gemessen) den Verbrennungsmotor mit einem unterstöchiometrischen Kraftstoff-Frischgas-Verhältnis betreibt und gleichzeitig ein Überströmen von Frischgas aus dem Frischgasstrang über die Überströmleitung in den Abgasstrang derart regelt, dass sich in der Abgasnachbehandlungseinrichtung ein möglichst stöchiometrisches Abgasverhältnis (d.h. ein stöchiometrisches Verhältnis von unverbrannten Kraftstoffbestandteilen und Sauerstoff im Abgas) einstellt.

Die Brennkraftmaschine kann einen variablen Ventiltrieb derart aufweisen, dass sie in einem Miller-Verfahren und/oder Atkinson-Verfahren betreibbar ist.

In einer bevorzugten Ausgestaltung der erfindungsgemäßen Brennkraftmaschine kann vorgesehen sein, dass die als Katalysator ausgebildete Abgasnachbehandlungseinrichtung einen (motornahen) Vorkatalysator und einen (stromab des Vorkatalysators angeordneten) Nachkatalysator umfasst, wobei die Überströmleitung zwischen dem Vorkatalysator und dem Nachkatalysator in den Abgasstrang mündet. Somit kann vorgesehen sein, eine katalytische Konvertierung der durch den unterstöchiometrischen Betrieb des Verbrennungsmotors erzeugten unverbrannten Kraftstoffbestandteile erst in dem Nachkatalysator vorzunehmen. Ein Vorteil hierbei kann sein, dass nur der Nachkatalysator mit der zusätzlichen Wärmeenergie, die durch die exotherme Konvertierung der unverbrannten Kraftstoffbestandteile mit dem Sauerstoff des zugeführten Frischgases erzeugt wird, beaufschlagt wird. Dies kann unproblematisch sein, da der Nachkatalysator infolge seiner motorfernen Anordnung regelmäßig nicht so hoch temperaturbelastet ist wie der Vorkatalysator, der bei dieser Ausgestaltung der Brennkraftmaschine von einem zusätzlichen Eintrag von Wärmeenergie ausgenommen ist.

In einer weiterhin bevorzugten Ausgestaltung der erfindungsgemäßen Brennkraftmaschine kann vorgesehen sein, dass der Verdichter Teil eines Abgasturboladers ist und somit von einer in den Abgasstrang integrierten Turbine antreibbar ist. Dabei kann insbesondere vorgesehen sein, dass die Turbine mittels eines regelbaren Bypasses (einem sogenannten "Wastegate") umgehbar ist. Ein solcher Abgasturbolader kann sich demnach insbesondere durch eine Überdimensionierung hinsichtlich der grundsätzlich zur Verfügung stehenden Turbinenleistung bei einem Betrieb des Verbrennungsmotors bei oder nahe Volllast auszeichnen. Der Verdichter des Abgasturboladers würde somit bei einem Betrieb des Verbrennungsmotors bei oder nahe Volllast mehr Verdichterleistung erzeugen, als für den Betrieb des Verbrennungsmotors vorgesehen ist, was durch ein Vorbeiführen eines Teils des Abgasstroms an der Turbine über den Bypass und somit eine definiert verringerte Turbinenleistung vermieden werden kann. Durch eine angepasste Steuerung des regelbaren Bypasses ist es somit möglich, einen Teil des Frischgases stromab des Verdichters abzuzweigen und über die Überströmleitung in den Abgasstrang einzubringen, ohne dass dies einen Einfluss auf die Menge und den Druck des dem Verbrennungsmotor zugeführten Frischgasstroms hat.

In einer Ausführungsform des erfindungsgemäßen Verfahrens kann vorgesehen sein, dass eine Ansteuerung der Regeleinrichtung der Überströmleitung und damit eine Regelung des über die Überströmleitung geführten Massenstroms des Frischgases (Überströmmassenstroms) anhand eines in der Steuereinheit gespeicherten Kennfelds erfolgt, in dem das von dem Verbrennungsmotor erzeugte Drehmoment über der Drehzahl des Verbrennungsmotors aufgetragen ist. In diesem Kennfeld können Bereiche definiert sein, denen bestimmte Öffnungsstellungen der Regeleinrichtung und damit definierte Überströmmassenströme zugeordnet sind. Eine entsprechende Ausgestaltung der erfindungsgemäßen Brennkraftmaschine sieht vor, dass die Steuereinheit derart ausgebildet ist, dass diese die Regeleinrichtung in Abhängigkeit eines solchen gespeicherten Kennfelds ansteuert.

Weiterhin kann vorgesehen sein, dass mittels der Steuereinheit ein aktueller Abgasmassenstrom berechnet wird. Aus diesem aktuellen Abgasmassenstrom und einem dazugehörigen Verhältnis von unverbrannten Kraftstoffbestandteilen zu Sauerstoff im Abgas (Abgasverhältnis, λ, Luftzahl), das mittels einer stromauf der Mündung der Überströmleitung gelegenen Lambdasonde gemessen werden kann, kann dann ein Überströmmassenstrom und eine dazugehörige Ansteuerung (und somit eine Öffnungsstellung) der Regeleinrichtung ermittelt werden. Demnach kann vorgesehen sein, das tatsächlich vorliegende Abgasverhältnis in einem Abschnitt des Abgasstrangs, der vor der Mündung der Überströmleitung gelegen ist, zu ermitteln und dies bei der Regelung des Überströmmassenstroms zu verwenden. Dadurch kann eine genauere Regelung des Überströmmassenstroms erreicht werden. Sich ändernde Randbedingungen, wie beispielsweise eine sich verändernde Umgebungslufttemperatur sowie ein sich verändernder Umgebungsluftdruck, können auf diese Weise berücksichtigt und in die Regelung des Überströmmassenstroms einbezogen werden.

Beide Möglichkeiten können dazu dienen, eine Ansteuerung für die Regeleinrichtungen zu realisieren, mit der der Überströmmassenstrom derart geregelt wird, dass sich ein Abgasverhältnis von ca. 1 (stöchiometrisch) mit einer möglichst nur geringen Abweichung von beispielsweise ± 5% ergibt. Hierbei kann es sich vorzugsweise um eine Vorregelung handeln

Basierend auf dieser Vorregelung lässt sich eine genauere Einstellung des Abgasverhältnisses in der Abgasnachbehandlungseinrichtung realisieren, wenn mittels einer stromab von zumindest der Mündung der Überströmleitung und insbesondere auch der Abgasnachbehandlungseinrichtung in den Abgasstrang integrierten Lambdasonde das tatsächlich vorliegende Abgasverhältnis gemessen und der entsprechende Messwert genutzt wird, um eine genauere Einstellung eines stöchiometrischen Abgasverhältnisses in der Abgasnachbehandlungseinrichtung vorzunehmen (Nachregelung).

Dabei kann vorgesehen sein, dass die Nachregelung zu einer angepassten Ansteuerung der Regeleinrichtung führt. Vorteilhaft kann jedoch sein, im Rahmen der Nachregelung eine genauere Einstellung des Abgasverhältnisses in der Abgasnachbehandlungseinrichtung durch eine (geringfügige) Anpassung der dem Verbrennungsmotor zugeführten Kraftstoffmenge zu erreichen. Dabei kann besonders bevorzugt vorgesehen sein, diese Anpassung der zugeführten Kraftstoffmenge derart durchzuführen, dass sich eine (hochfrequente) Schwankung (ein sogenannter "Wobbel") des von der stromab der Mündung bzw. der Abgasnachbehandlungseinrichtung angeordneten Lambdasonde gemessenen Abgasverhältnisses um den Zielwert (λ = 1) einstellt. Insbesondere kann eine Schwankung zwischen 0,95 und 1,05 und besonders bevorzugt zwischen 0,97 und 1,03 vorgesehen sein. Dabei kann vorteilhafterweise eine Sauerstoff speichernde Funktionalität einer vorzugsweise in die Abgasnachbehandlungseinrichtung integrierten Cer-Komponente ausgenutzt werden. Eine solche Cer-Komponente kann in bekannter Weise bei einem überstöchiometrischen Abgasverhältnis Sauerstoff binden, das diese bei einem unterstöchiometrischen Abgasverhältnis selbsttätig wieder freigibt. Durch die schwankende Nachregelung des Abgasverhältnisses mittels einer entsprechenden Ansteuerung der Kraftstoffzufuhr kann erreicht werden, dass der Abgasnachbehandlungseinrichtung (und der Cer-Komponenten) im zeitlichen Mittel ein im Wesentlichen stöchiometrisches Abgasverhältnis zugeführt wird. Die Schwankung des Abgasverhältnisses wird dann von der Cer-Komponente geglättet, so dass im Ergebnis kontinuierlich ein im Wesentlichen exaktes stöchiometrisches Abgasverhältnis in der Abgasnachbehandlungseinrichtungen zur Verfügung steht.

Die vorliegende Erfindung wird nachfolgend anhand eines in den Zeichnungen dargestellten Ausführungsbeispiels näher erläutert. In den Zeichnungen zeigt:
- Fig. 1:: ein bevorzugtes Ausführungsbeispiel einer erfindungsgemäßen Brennkraftmaschine in einer schematischen Darstellung;
- Fig. 2:: schematisch ein Kennfeld, in welchem die λ-Regelung eines Verbrennungsmotors der Brennkraftmaschine in Abhängigkeit von dem Drehmoment und der Drehzahl des Verbrennungsmotors definiert ist; und
- Fig. 3:: schematisch ein Verdichterkennfeld eines Verdichters der Brennkraftmaschine.

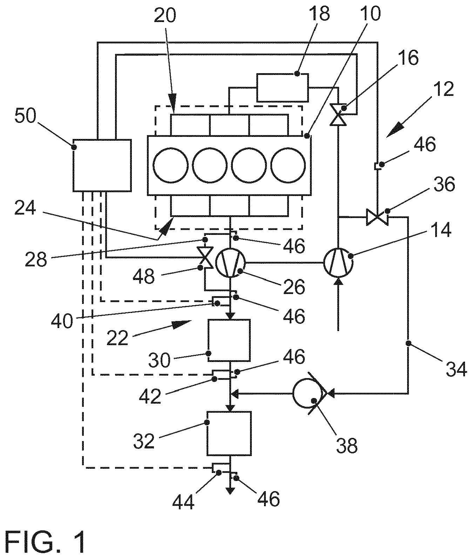

Die Fig. 1 zeigt eine Ausführungsform einer erfindungsgemäßen Brennkraftmaschine. Diese umfasst einen nach dem Otto-Prinzip arbeitenden Verbrennungsmotor 10, der hier beispielsweise als vierzylindriger Hubkolbenverbrennungsmotor ausgebildet ist. Der Verbrennungsmotor 10 wird über einen Frischgasstrang 12 mit Frischgas (Umgebungsluft) versorgt. Dazu wird das Frischgas nach dem Ansaugen aus der Umgebung zunächst mittels eines Verdichters 14 verdichtet. Das verdichtete Frischgas wird dann, über eine Drosselklappe 16 gesteuert, durch einen Ladeluftkühler 18 geführt, in dem das infolge der Verdichtung erwärmte Frischgas bis zum Erreichen der gewünschten Temperatur für den Eintritt in den Verbrennungsmotor 10 gekühlt wird. Über ein Saugrohr 20 tritt das Frischgas daraufhin in Brennräume des Verbrennungsmotors 10 ein, in denen dieses beziehungsweise der darin enthaltene Sauerstoff in bekannter Weise mit direkt in die Brennräume eingespritztem Kraftstoff verbrannt wird.

Das bei der Verbrennung des Kraftstoff-Frischgas-Gemisches entstehende Abgas wird über einen Abgasstrang 22 der Brennkraftmaschine abgeführt. Der Abgasstrang 22 umfasst einen Abgaskrümmer 24, in dem das aus den einzelnen Brennräumen ausströmende Abgas zusammengeführt wird, sowie eine davon stromab angeordnete Turbine 26. Die Turbine 26 bildet zusammen mit dem Verdichter 14 einen Abgasturbolader aus und ist mittels eines regelbaren Bypasses 28 (Wastegate) umgehbar ausgeführt. Zur Regelung des Bypasses 28 ist in diesen ein regelbares Drosselelement 48 integriert. Der Bypass 28 dient dazu, in bestimmten, zu einem großen Abgasmassenstrom führenden Betriebszuständen des Verbrennungsmotors 10, einen Teil des Abgasmassenstroms an der Turbine 26 vorbeizuführen, um so den Ladedruck im Frischgasstrang zu begrenzen.

In den Abgasstrang 22 ist stromab der Turbine 26 weiterhin eine Abgasnachbehandlungseinrichtung in Form eines Dreiwegekatalysators integriert. Dabei ist eine Unterteilung des Dreiwegekatalysators in einen Vorkatalysator 30 sowie einen stromab davon angeordneten Nachkatalysator 32 vorgesehen.

In den zwischen dem Vorkatalysator 30 und dem Nachkatalysator 32 liegenden Abschnitt des Abgasstrangs 22 mündet eine Überströmleitung 34. Diese Überströmleitung 34 geht stromab des Verdichters 14 (und stromauf der Drosselklappe 16 sowie des Ladeluftkühlers 18) aus dem Frischgasstrang 12 ab. In die Überströmleitung 34 ist eine Regeleinrichtung 36, die beispielsweise in Form eines abgestuft oder stufenlos verstellbaren Klappenventils ausgebildet sein kann, sowie ein Rückschlagventil 38 integriert. Mittels der Regeleinrichtung 36 kann ein Überströmen von verdichtetem Frischgas aus dem Frischgasstrang 12 in den zwischen dem Vorkatalysator 30 und dem Nachkatalysator 32 gelegenen Abschnitt des Abgasstrang 22 gesteuert werden. Das Rückschlagventil 38 verhindert unabhängig von der jeweiligen Öffnungsstellung der Regeleinrichtung 36 ein Überströmen von Abgas aus dem Abgasstrang 22 in den Frischgasstrang 12.

In den Abgasstrang 22 sind weiterhin noch drei Lambdasonden 40, 42, 44 integriert. Davon ist eine erste (40) zwischen der Turbine 26 und dem Vorkatalysator 30, eine zweite (42) zwischen dem Vorkatalysator 30 und dem Nachkatalysator 32 sowie die dritte (44) stromab des Nachkatalysators 32 angeordnet. Zudem sind in den Frischgasstrang 12 sowie den Abgasstrang 22 noch mehrere Temperatur- und/oder Drucksensoren 46 integriert, die die Temperatur und den Druck des Frischgases bzw. des Abgases an den entsprechenden Abschnitten des Frischgasstrangs 12 und des Abgasstrangs 22 messen.

Die in die Überströmleitung 34 integrierte Regeleinrichtung 36, die Drosselklappe 16, das in den die Turbine 26 umgehenden Bypass 28 integrierte Drosselelement 48, sowie nicht dargestellte Kraftstoffinjektoren werden von einer Steuereinheit 50 in Form einer zentralen Motorsteuerung angesteuert. Die Messwerte der Lambdasonden 40, 42, 44 und der Temperatur- und Drucksensoren 46 werden der Steuereinheit 50 zugeführt, so dass diese Messwerte bei der Regelung der oben genannten Komponenten der Brennkraftmaschine genutzt werden können.

Sofern der grundsätzlich mit einem stöchiometrischen Kraftstoff-Frischgas-Verhältnis betriebene Verbrennungsmotor 10 (über längere Zeit) mit hoher Leistung betrieben wird, kann es dazu kommen, dass die Temperatur des Abgases die obere Grenztemperatur eines definierten Betriebstemperaturbereichs der Turbine und/oder des Vorkatalysators erreicht. In diesem Fall ist vorgesehen, den Verbrennungsmotor 10 nicht mehr mit einem stöchiometrischen sondern mit einem unterstöchiometrischen Kraftstoff-Frischgas-Verhältnis zu betreiben. Dabei kann zur Regelung der Einspritzmenge des Kraftstoffs insbesondere auf die Messwerte der ersten Lambdasonde 40 und/oder der zweiten Lambdasonde 42 zurückgegriffen werden.

Das Umstellen auf einen unterstöchiometrischen Betrieb des Verbrennungsmotors 10 stellt eine wirkungsvolle Möglichkeit dar, die Temperatur des Abgases zu begrenzen, führt jedoch dazu, dass das Abgas unverbrannte Kraftstoffbestandteile in relevanten Mengen enthält. Um diese in dem Dreiwegekatalysator konvertieren zu können, ist es erforderlich, den Sauerstoffmangel in dem Abgas auszugleichen und somit ein stöchiometrisches Abgasverhältnis einzustellen. Dies erfolgt primär über eine entsprechende Ansteuerung der in die Überströmleitung 34 integrierten Regeleinrichtung 36, wodurch ein definierter Überströmmassenstrom des Frischgases aus dem Frischgasstrang 12 in den zwischen dem Vorkatalysator 30 und dem Nachkatalysator 32 gelegenen Abschnitt des Abgasstrangs 22 erzeugt wird. Da der hierfür genutzte Anteil des Frischgases stromab des Verdichters 14 aus dem Frischgasstrang 12 entnommen wird, ist sichergestellt, dass das Frischgas im Verhältnis zu dem in dem entsprechenden Abschnitt des Abgasstrangs 22 enthaltenen Abgas unter Überdruck steht. Dies gilt zumindest für die Betriebszustände des Verbrennungsmotors 10, in denen ein Überströmen von Frischgas über die Überströmleitung 34 vorgesehen ist, da diese durch eine hohe Leistungsabgabe des Verbrennungsmotors 10, damit einen großen Abgasmassenstrom und folglich eine hohe Verdichterleistung gekennzeichnet sind.

Mit Hilfe der Regeleinrichtung 36 wird der Überströmmassenstrom derart geregelt, dass sich in dem Nachkatalysator 32 ein im Wesentlichen stöchiometrisches Abgasverhältnis einstellt, das für eine möglichst gute katalytische Konvertierung der Schadstoffe erforderlich ist. Dabei kann auf das im Nachkatalysator 32 tatsächlich vorliegende Abgasverhältnis kontinuierlich anhand des Messwerts der dritten Lambdasonde 44 geschlossen werden.

Vorgesehen ist, dass mittels der Regeleinrichtung 36 eine Vorregelung des Abgasverhältnisses vorgenommen wird, wobei ausschließlich durch eine entsprechende Ansteuerung der Regeleinrichtung 36 ein Abgasverhältnis im Nachkatalysator 32 von ca. 1 mit einer nur geringen Abweichungen von beispielsweise ± 5% erreicht werden soll.

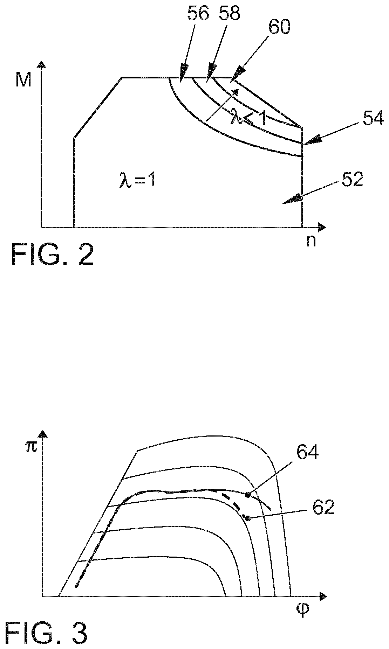

Dabei kann vorgesehen sein, eine Ansteuerung der Regeleinrichtung 36 anhand des in der Fig. 2 dargestellten Kennfelds vorzunehmen. Darin ist der durch das von dem Verbrennungsmotor 10 erzeugte Drehmoment (M) sowie der Drehzahl (n) einer Kurbelwelle des Verbrennungsmotors 10 definierte Betriebsbereich des Verbrennungsmotors 10 dargestellt. Dieser Betriebsbereich ist in insgesamt vier Regelbereiche unterteilt, die sich hinsichtlich des dem Verbrennungsmotor 10 zugeführten Kraftstoff-Frischgas-Gemisches unterscheiden. Der größte Regelbereich stellt den stöchiometrischen Betrieb (λ = 1) des Verbrennungsmotors 10 dar und kann als Normal-Regelbereich 52 bezeichnet werden. Dieser erstreckt sich, ausgehend von dem niedrigsten Drehmoment in Verbindung mit den niedrigsten Drehzahlen (und somit einem Leerlauf des Verbrennungsmotors 10) bis hin zu vergleichsweise großen Leistungsabgaben des Verbrennungsmotors 10, wobei auch ein Betrieb bei Höchstdrehzahl mit dann bis zu mittlerer Last sowie Volllast mit dann bis zu mittleren Drehzahlen umfasst ist. Ein deutlich kleinerer Hochleistung-Regelbereich 34 ist dagegen durch einen unterstöchiometrischen Betrieb (λ < 1) des Verbrennungsmotors 10 gekennzeichnet. In diesem Hochleistung-Regelbereich 34 soll eine Begrenzung der Abgastemperatur erreicht werden. Vorgesehen sein kann, den Hochleistung-Regelbereich 54 in Unterbereiche 56, 58, 60 zu unterteilen, die sich hinsichtlich des einzustellenden (unterstöchiometrischen) Kraftstoff-Frischgas-Verhältnisses unterscheiden. Dabei ist vorgesehen, mit zunehmender Leistungsabgabe des Verbrennungsmotors 10 diesen in zunehmendem Maße unterstöchiometrisch (beispielsweise bis zu λ = 0,7) zu betreiben.

Sofern eine Ansteuerung der Regeleinrichtung 36 anhand des in der Fig. 2 dargestellten Kennfelds erfolgt, werden den verschiedenen Regelbereichen (und Unterbereichen des Hochleistung-Regelbereichs 56) definierte Ansteuerungswerte und somit Öffnungsstellungen der Regeleinrichtung 36 zugeordnet. In dem Normal-Regelbereich 52 ist vorgesehen, die Regeleinrichtung 36 vollständig zu verschließen, so dass kein Überströmen von Frischgas über die Überströmleitung 34 vorgesehen ist. In dem Hochleistung-Regelbereich 54 erfolgt dagegen ein definiertes Überströmen von Frischgas, wobei der jeweilige Überströmmassenstrom durch eine entsprechende Öffnungsstellung der Regeleinrichtung 36, die in Abhängigkeit von dem Kennfeld gemäß der Fig. 2 ermittelt wurde, eingestellt wird. Die zu ermittelnde Öffnungsstellung der Regeleinrichtung 36 ist demnach eine Funktion des von dem Verbrennungsmotor 10 erzeugten Drehmoments (M) sowie von dessen Drehzahl (n).

Sofern eine genauere Vorregelung des Abgasverhältnises im Nachkatalysator 32 erfolgen soll, kann vorgesehen sein, die jeweilige Öffnungsstellung der Regeleinrichtung 36 rechnerisch mittels der Steuereinheit 50 bestimmen zu lassen. Dazu kann mittels der Steuereinheit 50 zunächst ein derzeit vorliegender Abgasmassenstrom berechnet werden. Dies kann beispielsweise anhand einer kontinuierlichen Messung der in die Brennräume eingespritzten Kraftstoffmengen und der Messung des Abgasverhältnisses (z.B. direkt hinter dem Verbrennungsmotor 10) in Verbindung mit dem (idealen) Verbrennungsverhältnis für den Kraftstoff erfolgen. Mittels des berechneten Abgasmassenstroms kann ein Soll-Überströmmassenstrom ermittelt werden, der nach einer Zumischung zu dem Abgasmassenstrom zu dem gewünschten stöchiometrischen Abgasverhältnis führen würde. Aus dem Soll-Überströmmassenstrom kann in Verbindung mit einem über der Regeleinrichtung 36 gemessenen Druckverhältnis eine entsprechende Ziel-Öffnungsstellung der Regeleinrichtung 36 (und ein entsprechender Ansteuerungswert für die Steuereinrichtung) ermittelt werden. Die Ziel-Öffnungsstellung der Regeleinrichtung 36 ergibt sich somit als Funktion des Druckverhältnisses über der Regeleinrichtung 36 sowie des Soll-Überströmmassenstroms. Über eine derartige, kontinuierliche oder schrittweise andauernde Berechnung kann die Ziel-Öffnungsstellung der Regeleinrichtung 36 und damit der tatsächliche Überströmmassenstrom derart geregelt werden, dass sich ein Abgasverhältnis von ca. 1 mit einer nur geringen Abweichungen von beispielsweise ± 5% einstellt.

Ein Vorteil der Berechnung der Ziel-Öffnungsstellung der Regeleinrichtung 36 in Abhängigkeit von tatsächlichen Werten (Abgasmassenstrom und Druckverhältnis über der Regeleinrichtung 36) gegenüber einer Bestimmung anhand des Kennfelds gemäß der Fig. 2 kann darin liegen, dass geänderte Randbedingungen, wie insbesondere eine sich verändernde Umgebungstemperatur und ein sich verändernder Umgebungsdruck, berücksichtigt werden und somit die Genauigkeit der Vorregelung des Abgasverhältnisses im Nachkatalysator 32 verbessert werden kann.

Die durch eines der beschriebenen Verfahren ermittelte Ziel-Öffnungsstellung der Regeleinrichtung 36 wird beispielsweise über einen von der Steuereinrichtung entsprechend angesteuerten pneumatischen oder elektrischen Aktor der Regeleinrichtung 36 eingestellt.

Anschließend kann eine Nachregelung des Abgasverhältnisses im Nachkatalysator vorgesehen sein. Dies erfolgt anhand der Messwerte der dritten Lambdasonde 44. Anhand der Messwerte ermittelte Abweichungen von dem stöchiometrischen Abgasverhältnis werden durch eine entsprechende Anpassung der eingespritzten Kraftstoffmenge kompensiert. Dabei kann vorgesehen sein, eine (hochfrequent) schwankende Anpassung der eingespritzten Kraftstoffmenge vorzusehen, die zu einem entsprechend hochfrequent schwankenden Realwert des Abgasverhältnisses um den Zielwert von 1 führt. Beispielsweise kann ein Schwanken des Realwerts zwischen 0,97 und 1,03 vorgesehen sein. Dieses Schwanken des Realwerts kann beispielsweise anhand der Messwerte der ersten und/oder zweiten Lambdasonde 40, 42 überprüft und gegebenenfalls korrigiert werden.

Bei der erfindungsgemäß vorgesehenen katalytischen Konvertierung von unverbrannten Kraftstoffbestandteilen im Nachkatalysator 32 wird Wärmeenergie freigesetzt, die zu einer höheren Temperaturbelastung des Nachkatalysators 32 führen kann. Wegen der motorfernen Anordnung des Nachkatalysators 32 stellt dies jedoch regelmäßig kein Problem dar, da das Abgas, dessen Temperatur durch den unterstöchiometrischen Betrieb des Verbrennungsmotors unterhalb der oberen Grenztemperaturen der Turbine 26 sowie des Vorkatalysators 30 gehalten wird, bei der Durchströmung dieser Komponenten sowie der dazwischen angeordneten Abschnitte des Abgasstrangs 22 in erheblichem Maße abkühlt (beispielsweise um ca. 100 K bis 200 K) so dass eine vergleichsweise geringe Temperaturerhöhung infolge der exothermen Konvertierung in dem Nachkatalysator 32 nicht zu einem Überschreiten von dessen oberer Grenztemperatur führen wird. Dies gilt sowohl für den stationären Betrieb des Verbrennungsmotors 10 als auch für den instationären Betrieb, bei dem es wegen der großen Wärmespeicherkapazität des vor dem Nachkatalysator 32 angeordneten Abschnitts des Frischgasstrangs 22 nur selten zu einer kritischen Erhöhung der Bauteiltemperaturen kommt. Ein Abkühlen des Abgases beim Durchströmen des stromauf des Nachkatalysators 32 liegenden Abschnitts des Abgasstrangs 22 kann durch geeignete Maßnahmen, z.B. eine geeignete Materialwahl und/oder eine Vergrößerung der mit der Umgebung wärmetauschenden Oberflächen dieses Abschnitt (beispielsweise durch die Integration von Kühlrippen) unterstützt werden.

Der Abgasturbolader ist grundsätzlich so ausgelegt, dass beim Betrieb des Verbrennungsmotors 10 mit hoher Leistung die von der Turbine 26 grundsätzlich zur Verfügung stellbare Leistung großer als die für den Betrieb des Verbrennungsmotors 10 maximal vorgesehene Verdichterleistung ist. Daher ist vorgesehenen, bei einem Betrieb des Verbrennungsmotors 10 mit hoher Leistung einen Teil des Abgasstroms über den Bypass 28 an der Turbine 26 vorbeizuführen. Ein ebenfalls im Betrieb des Verbrennungsmotors 10 mit hoher Leistung vorgesehenes Überströmen von verdichtetem Frischgas über die Überströmleitung 34 kann daher ohne Probleme durch eine angepasste Ansteuerung des in den Bypass 28 integrierten Drosselelements 48 und folglich durch einen größeren Frischgasmassenstrom durch den Verdichter 14 kompensiert werden und hat somit keinen Einfluss auf den Betrieb des Verbrennungsmotors 10. Bei der Auslegung des Abgasturboladers sollte diese Zunahme des Frischgasmassenstroms jedoch berücksichtigt werden, damit die sogenannte Stopfgrenze des Verdichters 14 nicht überschritten wird. Die Fig. 3 verdeutlicht diese Problematik. Dort sind in einem Verdichterkennfeld die Motorbetriebslinien bei einem Betrieb des Verbrennungsmotors 10 mit stöchiometrischem Kraftstoff-Frischgas-Verhältnis über dem gesamten Motorbetriebsbereich (gestrichelte Motorbetriebslinie 62) sowie mit einer Verschiebung des Kraftstoff-Frischgas-Verhältnisses in den unterstöchiometrischen Bereich bei hohen Leistungen (durchgehende Motorbetriebslinie 64) dargestellt. Dabei zeigt das Verdichterkennfeld in bekannter Weise neben den Motorbetriebslinien 62, 64 mehrere, das Verdichterkennfeld aufspannende Drehzahllinien, die links in dem Diagramm von der sogenannten Pumpgrenze und rechts von der Stopfgrenze begrenzt sind. Durch den unterstöchiometrischen Betrieb des Verbrennungsmotors 10 und die zur Kompensierung des infolge der Abzweigung über die Überströmleitung 34 erhöhten Frischgasmassenstroms durch den Verdichter nähert sich die entsprechende Motorbetriebslinie 64 deutlich mehr der Stopfgrenze an. Für eine erfindungsgemäße Brennkraftmaschine sollte somit ein Verdichter 14 mit einem ausreichend breiten Verdichterkennfeld eingesetzt werden.

Die Erzielung eines breiten Verdichterkennfelds durch sogenannte kennfeldsstabilisierende Maßnahmen kann im Zusammenhang mit der Erfindung beispielsweise durch die Integration eines Rezirkulationskanals, durch eine Diffusorbeschaufelung und/oder das Vorsehen eines Vorleitgitters erreicht werden.

### Bezugszeichenliste

- 10: Verbrennungsmotor
- 12: Frischgasstrang
- 14: Verdichter
- 16: Drosselklappe
- 18: Ladeluftkühler
- 20: Saugrohr
- 22: Abgasstrang
- 24: Abgaskrümmer
- 26: Turbine
- 28: Bypass
- 30: Vorkatalysator
- 32: Nachkatalysator
- 34: Überströmleitung
- 36: Regeleinrichtung
- 38: Rückschlagventil
- 40: erste Lambdasonde
- 42: zweite Lambdasonde
- 44: dritte Lambdasonde
- 46: Temperatur-und/oder Drucksensor
- 48: Drosselelement
- 50: Steuereinheit
- 52: Normal-Regelbereich
- 54: Hochleistung-Regelbereich
- 56: erster Unterbereich des Hochleistung-Regelbereichs
- 58: zweiter Unterbereich des Hochleistung-Regelbereichs
- 60: dritter Unterbereich des Hochleistung-Regelbereich
- 62: Motorbetriebslinie bei ausschließlich stöchiometrischem Betrieb
- 64: Motorbetriebslinie bei teilweise unterstöchiometrischem Betrieb

## Patentansprüche

1. Brennkraftmaschine mit
- einem Verbrennungsmotor (10),
- einem einen Verdichter (14) ausweisenden Frischgastrang (12),
- einem eine Abgasnachbehandlungseinrichtung sowie einen Temperatursensor (46) aufweisenden Abgasstrang (22),
- einer mittels einer Regeleinrichtung (36) regelbaren Überströmleitung (34), die stromab des Verdichters (14) aus dem Frischgasstrang (12) abgeht und stromauf der Abgasnachbehandlungseinrichtung in den Abgasstrang (22) mündet und
- einer Steuereinheit (50), die derart ausgebildet ist, dass durch diese ein dem Verbrennungsmotor (10) zugeführtes Kraftstoff-Frischgas-Verhältnis regelbar ist,
**dadurch gekennzeichnet, dass** die Steuereinheit (50) beim Überschreiten einer Grenztemperatur des Abgases den Verbrennungsmotor (10) mit einem unterstöchiometrischen Kraftstoff-Frischgas-Verhältnis betreibt und gleichzeitig ein Überströmen von Frischgas aus dem Frischgasstrang (12) über die Überströmleitung (34) in den Abgasstrang (22) derart regelt, dass sich ein möglichst stöchiometrisches Abgasverhältnis in der Abgasnachbehandlungseinrichtung einstellt.

2. Brennkraftmaschine gemäß Anspruch 1, **dadurch gekennzeichnet, dass** die Abgasnachbehandlungseinrichtung ein Katalysator ist.

3. Brennkraftmaschine gemäß Anspruch 2, **dadurch gekennzeichnet, dass** der Katalysator eine Vorkatalysator (30) und einen Nachkatalysator (32) umfasst, wobei die Überströmleitung (34) zwischen dem Vorkatalysator (30) und dem Nachkatalysator (32) in den Abgasstrang (22) mündet.

4. Brennkraftmaschine gemäß einem der vorhergehenden Ansprüche, **dadurch gekennzeichnet, dass** der Verdichter (14) von einer in den Abgasstrang (22) integrierten Turbine (26) antreibbar ist.

5. Brennkraftmaschine gemäß Anspruch 4, **dadurch gekennzeichnet, dass** die Turbine (26) mittels eines regelbaren Bypasses (28) umgehbar ist.

6. Brennkraftmaschine gemäß einem der vorhergehenden Ansprüche, **dadurch gekennzeichnet, dass** die Steuereinheit (50) derart ausgebildet ist, dass diese die Regeleinrichtung (36) in Abhängigkeit eines gespeicherten Kennfelds ansteuert.

7. Brennkraftmaschine gemäß einem der vorhergehenden Ansprüche, **dadurch gekennzeichnet, dass** die Steuereinheit (50) derart ausgebildet ist, dass diese den aktuellen Abgasmassenstrom ermittelt und aus dem aktuellen Abgasmassenstrom und einem dazugehörigen, mittels einer stromauf der Mündung der Überströmleitung (34) in den Abgasstrang (22) integrierte Lambdasonde (40, 44) gemessenen Abgasverhältnis ein Überströmmassenstrom und eine dazugehörige Öffnungsstellung der Regeleinrichtung (36) ermittelt.

8. Brennkraftmaschine gemäß einem der vorhergehenden Ansprüche, **gekennzeichnet durch** eine stromab der Abgasnachbehandlungseinrichtung in den Abgasstrang (22) integrierte Lambdasonde (44).

9. Brennkraftmaschine gemäß Anspruch 8, **dadurch gekennzeichnet, dass** die Steuereinheit (50) derart ausgebildet ist, dass diese die Regelung des dem Verbrennungsmotor (10) zugeführten Kraftstoff-Frischgas-Verhältnisses anhand eines von der stromab der Abgasnachbehandlungseinrichtung angeordneten Lambdasonde (44) gemessenen Messwerts anpasst, um ein möglichst stöchiometrisches Abgasverhältnis in der Abgasnachbehandlungseinrichtung einzustellen.

10. Verfahren zum Betrieben einer Brennkraftmaschine mit einem Verbrennungsmotor (10), einem einen Verdichter (14) ausweisenden Frischgastrang (12), einem eine Abgasnachbehandlungseinrichtung und einen Temperatursensor (46) aufweisenden Abgasstrang (22) und einer regelbaren Überströmleitung (34), die stromab des Verdichters (14) aus dem Frischgasstrang (12) abgeht und stromauf der Abgasnachbehandlungseinrichtung in den Abgasstrang (22) mündet, **dadurch gekennzeichnet, dass** beim Überschreiten einer Grenztemperatur des Abgases der Verbrennungsmotor (10) mit einem unterstöchiometrischen Kraftstoff-Frischgas-Verhältnis betrieben wird und gleichzeitig Frischgas aus dem Frischgasstrang (12) über die Überströmleitung (34) in den Abgasstrang (22) eingebracht wird, um ein möglichst stöchiometrisches Abgasverhältnis in der Abgasnachbehandlungseinrichtung einzustellen.

## Claims

1. Internal combustion engine having
- a combustion motor (10),
- a fresh-gas tract (12) which has a compressor (14),
- an exhaust-gas tract (22) which has an exhaust-gas aftertreatment device and a temperature sensor (46),
- a flow transfer line (34) which is regulable by means of a regulating device (36) and which branches off from the fresh-gas tract (12) downstream of the compressor (14) and which opens into the exhaust-gas tract (22) upstream of the exhaust-gas aftertreatment device, and
- a control unit (50) which is designed such that a fuel-fresh gas ratio fed to the combustion motor (10) is regulable by means of said control unit,
**characterized in that**, in the event of an exceedance of a threshold temperature of the exhaust gas, the control unit (50) operates the combustion motor (10) with a substoichiometric fuel-fresh gas ratio and at the same time regulates a transfer flow of fresh gas from the fresh-gas tract (12) via the flow transfer line (34) into the exhaust-gas tract (22) such that an as far as possible stoichiometric exhaust-gas ratio is set in the exhaust-gas aftertreatment device.

2. Internal combustion engine according to Claim 1, **characterized in that** the exhaust-gas aftertreatment device is a catalytic converter.

3. Internal combustion engine according to Claim 2, **characterized in that** the catalytic converter comprises an upstream catalytic converter (30) and a downstream catalytic converter (32), wherein the flow transfer line (34) opens into the exhaust-gas tract (22) between the upstream catalytic converter (30) and the downstream catalytic converter (32).

4. Internal combustion engine according to any of the preceding claims, **characterized in that** the compressor (14) can be driven by a turbine (26) integrated into the exhaust-gas tract (22).

5. Internal combustion engine according to Claim 4, **characterized in that** the turbine (26) can be circumvented by means of a regulable bypass (28).

6. Internal combustion engine according to any of the preceding claims, **characterized in that** the control unit (50) is designed so as to actuate the regulating device (36) in a manner dependent on a stored characteristic map.

7. Internal combustion engine according to any of the preceding claims, **characterized in that** the control unit (50) is designed such that it determines the present exhaust-gas mass flow and, from the present exhaust-gas mass flow and an associated exhaust-gas ratio measured by means of a lambda probe (40, 44) integrated into the exhaust-gas tract (22) upstream of the opening-in point of the flow transfer line (34), determines a flow transfer mass flow and an associated opening position of the regulating device (36) .

8. Internal combustion engine according to one of the preceding claims, **characterized by** a lambda probe (44) which is integrated into the exhaust-gas tract (22) downstream of the exhaust-gas aftertreatment device.

9. Internal combustion engine according to Claim 8, **characterized in that** the control unit (50) is designed so as to adapt the regulation of the fuel-fresh gas ratio fed to the combustion motor (10), on the basis of a measurement value measured by the lambda probe (44) arranged downstream of the exhaust-gas aftertreatment device, in order to set an as far as possible stoichiometric exhaust-gas ratio in the exhaust-gas aftertreatment device.

10. Method for operating an internal combustion engine having a combustion motor (10), a fresh-gas tract (12) which has a compressor (14), an exhaust-gas tract (22) which has an exhaust-gas aftertreatment device and a temperature sensor (46), and a regulable flow transfer line (34) which branches off from the fresh-gas tract (12) downstream of the compressor (14) and which opens into the exhaust-gas tract (22) upstream of the exhaust-gas aftertreatment device, **characterized in that**, in the event of an exceedance of a threshold temperature of the exhaust gas, the combustion motor (10) is operated with a substoichiometric fuel-fresh gas ratio and at the same time fresh gas is introduced from the fresh-gas tract (12) via the flow transfer line (34) into the exhaust-gas tract (22) in order to set an as far as possible stoichiometric exhaust-gas ratio in the exhaust-gas aftertreatment device.

## Revendications

1. Machine à combustion interne avec
- un moteur à combustion interne (10),
- une ligne de gaz frais (12) présentant un compresseur (14),
- une ligne de gaz d'échappement (22) présentant un système de post-traitement de gaz d'échappement ainsi qu'un capteur de température (46),
- une conduite de débordement (34) réglable au moyen d'un système de régulation (36), qui part de la ligne de gaz frais (12) en aval du compresseur (14) et qui débouche dans la ligne de gaz d'échappement (22) en amont du système de post-traitement de gaz d'échappement, et
- une unité de commande (50), qui est configurée de telle manière qu'un rapport carburant-gaz frais fourni au moteur à combustion interne (10) puisse être régulé par celle-ci,
**caractérisée en ce que** l'unité de commande (50) fait fonctionner le moteur à combustion interne (10) avec un rapport carburant-gaz frais sous-stoechiométrique en cas de dépassement d'une température limite des gaz d'échappement et simultanément régule un débordement de gaz frais à partir de la ligne de gaz frais (12) via la conduite de débordement (34) dans la ligne de gaz d'échappement (22), de telle manière qu'il s'établisse une proportion de gaz d'échappement aussi stoechiométrique que possible dans le système de post-traitement de gaz d'échappement.

2. Machine à combustion interne selon la revendication 1, **caractérisée en ce que** le système de post-traitement de gaz d'échappement est un catalyseur.

3. Machine à combustion interne selon la revendication 2, **caractérisée en ce que** le catalyseur comprend un pré-catalyseur (30) et un post-catalyseur (32), dans laquelle la conduite de débordement (34) débouche dans la ligne de gaz d'échappement (22) entre le pré-catalyseur (30) et le post-catalyseur (32).

4. Machine à combustion interne selon l'une quelconque des revendications précédentes, **caractérisée en ce que** le compresseur (14) peut être entraîné par une turbine (26) intégrée dans la ligne de gaz d'échappement (22).

5. Machine à combustion interne selon la revendication 4, **caractérisée en ce que** la turbine (26) peut être contournée au moyen d'une dérivation réglable (28).

6. Machine à combustion interne selon l'une quelconque des revendications précédentes, **caractérisée en ce que** l'unité de commande (50) est configurée de telle manière qu'elle commande le système de régulation (36) en fonction d'un diagramme caractéristique mémorisé.

7. Machine à combustion interne selon l'une quelconque des revendications précédentes, **caractérisée en ce que** l'unité de commande (50) est configurée de telle manière qu'elle détermine le flux massique actuel de gaz d'échappement et qu'elle détermine, à partir du flux massique actuel de gaz d'échappement et d'un rapport de gaz d'échappement correspondant mesuré au moyen d'une sonde lambda (40, 44) intégrée dans la ligne de gaz d'échappement (22) en amont de l'embouchure de la conduite de débordement (34), un flux massique de débordement et une position d'ouverture correspondante du système de régulation (36).

8. Machine à combustion interne selon l'une quelconque des revendications précédentes, **caractérisée par** une sonde lambda (44) intégrée dans la ligne de gaz d'échappement (22) en aval du système de post-traitement de gaz d'échappement.

9. Machine à combustion interne selon la revendication 8, **caractérisée en ce que** l'unité de commande (50) est configurée de telle manière qu'elle adapte la régulation du rapport carburant-gaz frais fourni au moteur à combustion interne (10) à l'aide d'une valeur de mesure mesurée par la sonde lambda (44) disposée en aval du système de post-traitement de gaz d'échappement, afin d'établir une proportion de gaz d'échappement aussi stoechiométrique que possible dans le système de post-traitement de gaz d'échappement.

10. Procédé pour faire fonctionner une machine à combustion interne avec un moteur à combustion interne (10), une ligne de gaz frais (12) présentant un compresseur (14), une ligne de gaz d'échappement (22) présentant un système de post-traitement de gaz d'échappement et un capteur de température (46) et une conduite de débordement réglable (34), qui part de la ligne de gaz frais (12) en aval du compresseur (14) et qui débouche dans la ligne de gaz d'échappement (22) en amont du système de post-traitement de gaz d'échappement, **caractérisé en ce qu'**en cas de dépassement d'une température limite des gaz d'échappement on fait fonctionner le moteur à combustion interne (10) avec un rapport carburant-gaz frais sous-stoechiométrique et simultanément on introduit du gaz frais à partir de la ligne de gaz frais (12) via la conduite de débordement (34) dans la ligne de gaz d'échappement (22), afin d'établir une proportion de gaz d'échappement aussi stoechiométrique que possible dans le système de post-traitement de gaz d'échappement.
